# EUROPEAN PATENT APPLICATION

(11) **EP 0 673 027 A2**
(43) Date of publication of application: **20.09.1995**
(21) Application number: 94119867.3
(22) Date of filing: 15.12.1994
(51) Int. Cl.: G11B 20/12, G11B 20/14, G11B 27/30

(54) **Recording medium and method for recording a signal thereon**

(30) Priority: 16.03.1994 JP 46009/94
(71) Applicant: KABUSHIKI KAISHA TOSHIBA, Kawasaki-shi, Kanagawa-ken 210 (JP); TOSHIBA AVE CO., LTD, Minato-ku, Tokyo 105 (JP)
(72) Inventor: Kaneshige, Toshihiko, Minato-ku, Tokyo (JP); Ishizawa, Yoshiyuki, Minato-ku, Tokyo (JP)
(74) Representative: Henkel, Feiler, Hänzel & Partner

(57) **Abstract**

A recording medium and a method for recording a signal on the recording medium having a first frame and a second frame, the first frame including a first synchronous pattern (23,24), a second synchronous pattern (25) that follows the first synchronous pattern and first data (25-33), the first data being modulated into RLL code, the second frame including the first synchronous pattern (41,42) and second data, the second data being modulated into the RLL code, one sector of the recording medium being composed of at least one first frame and a plurality of second frames, wherein a pattern that includes the maximum code inversion length of the RLL code and that does not correspond to a modulation rule of the RLL code is recorded as at least part of the first synchronous pattern, and/or wherein a first pattern that includes a plurality of successive sequences of the minimum code inversion length of the RLL code and that does not correspond to a modulation rule of the RLL code is recorded as at least part of the second synchronous pattern.

## Description

The present invention relates to a recording medium such as an optical disc and a method for recording a signal thereon.

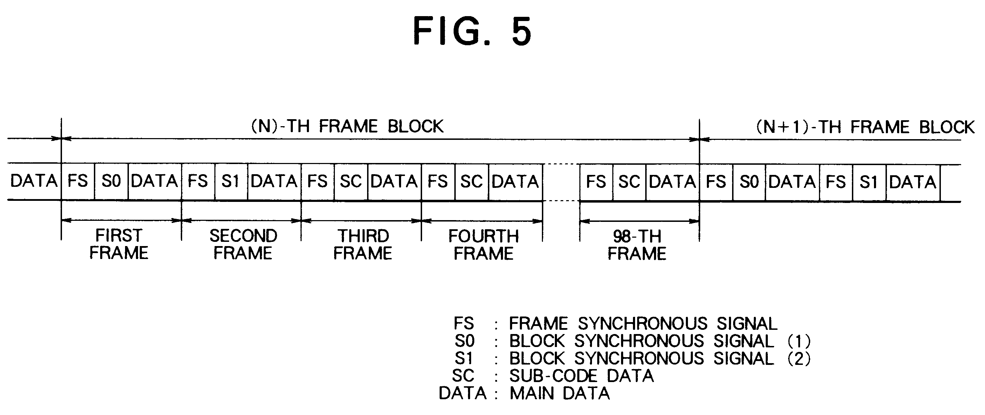

Fig. 5 is a schematic diagram showing data construction of frames formed on a CD (Compact Disc). As shown in Fig. 5, one frame block is composed of 98 frames, each of which has the same signal length. On each disc, a plurality of frame blocks are formed. A first frame of each frame block is composed of a frame synchronous signal (FS), a block synchronous signal (1)(SO), and main data (DATA). A second frame is composed of a frame synchronous signal (FS), a block synchronous signal (2)(S1), and main data (DATA). Each of third to 98th frames is composed of a frame synchronous signal (FS), sub-code data (SC), and main data (DATA).

The main data (DATA) is composed by modulating for example a digitized sound signal and an error correction code into EFM (Eight to Fourteen Modulation) code, which is one of RLL (Run Length Limited) codes. The EFM is a technique that converts 8-bit data into 14-bit data in which the minimum code inversion length (Tmin) is 3T and the maximum code inversion length (Tmax) is 11T.

The frame synchronous signal (FS) is composed by converting binary data "100000000001000000000010" corresponding to NRZI (Non-Return to Zero Inverted) technique. The frame synchronous signal (FS) contains two sequences of the maximum code inversion length (Tmax: 11T).

The block synchronous signal (1)(S0) is composed by converting binary data "00100000000001" corresponding to the NRZI technique.

The block synchronous signal (2)(S1) is composed by converting binary data "00000000100010" corresponding to the NRZI technique.

In other words, the block synchronous signal (1)(S0) and the block synchronous signal (2)(S1) contain signal patterns that do not correspond to the EFM modulation rule.

The sub-code data (SC) contains control information and address information. The sub-code data (SC) of the third to the 98th frames works altogether.

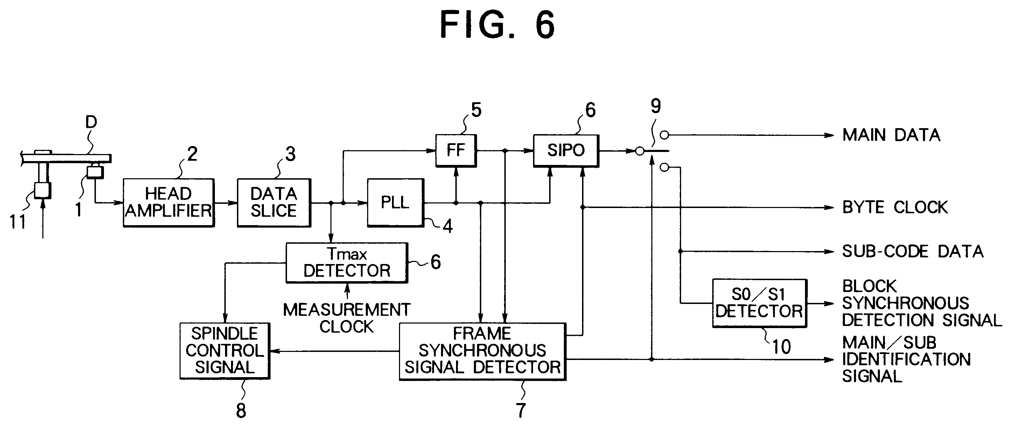

Next, the outline of a CD reproducing apparatus will be described. Fig. 6 is a block diagram showing the construction of the CD reproducing apparatus. In this block diagram, the construction of a tracking servo portion and process systems for main data and sub-data are omitted.

A signal that has been recorded on a disc D is read by an optical pickup 1 and then supplied to a head amplifier 2.

The head amplifier 2 amplifies the input signal and trims the wave shape thereof. An output signal of the head amplifier 2 is supplied to a data slice circuit 3.

The data slice circuit 3 digitizes the input signal and supplies the digitized signal to a Tmax detector 6 as well as to a PLL 4 and a FF (Flip-Flop) 5.

The PLL 4 extracts a clock component contained in the input signal and generates a bit clock synchronizing with the input signal.

The generated bit clock is supplied to the FF (Flip-Flop) 5, an SIPO 6, and a frame synchronous signal detector 7.

The FF (Flip-Flop) 5 samples the digitized reproduced signal corresponding to the bit clock and supplies the sampled signal to the SIPO 6 and the frame synchronous signal detector 7.

The frame synchronous signal detector 7 detects a pattern of the frame synchronous signal (FS) corresponding to both the reproduced signal received from the FF (Flip-Flop) 5 and the bit clock and accordingly generates a frame synchronous detection signal, a byte clock, and a main/sub identification signal.

The frame synchronous detection signal is a periodic signal that is proportional to the period of the frame synchronous signal (FS) contained in the reproduced signal.

The frame synchronous detection signal is supplied to a spindle control circuit 8.

The byte clock is a timing signal that is in synchronization with a detected point of the frame synchronous signal and that is used to divide the reproduced signal by every 14 bits that are the length of one byte of the EFM code.

The byte block is supplied to both the SIPO 6 and a another circuit (not shown) disposed downstream thereof that performs a predetermined process.

The main/sub identification signal is a timing signal that is in synchronization with a detected point of the frame synchronous signal and that is used to identify areas of sub-code data and main data contained in the reproduced signal.

The main/sub identification signal is used for both a switching signal of the switch 9 and a predetermined process of another circuit disposed downstream thereof.

When the areas are identified, the block synchronous signal (1)(S0) and the block synchronous signal (2)(S1) are treated as sub-code data.

The SIPO 6 converts the reproduced signal, which is a serial signal, into a 14-bit parallel signal corresponding to the bit clock and the byte clock and supplies the converted signal to the switch 9.

The switch 9 is switched corresponding to the main/sub identification signal and separates the reproduced signal received from the SIPO 6 into the main data and the sub-code data. The main data and the sub-code data are supplied to respective circuits (not shown) disposed downstream thereof that perform predetermined processes.

The sub-code, data, which contains the block synchronous signal (1)(S0) and the block synchronous signal (2)(S1), is supplied to a S0/S1 detector 10.

The S0/S1 detector 10 detects the block synchronous signal (1)(S0) and the block synchronous signal (2)(S1) and outputs a block synchronous detection signal. The block synchronous detection signal is supplied to another circuit (not shown) disposed downstream of the S0/S1 detector 10 that performs a predetermined process.

The Tmax detector 6 measures the maximum code inversion length of the reproduced signal that has been data-sliced corresponding to a measurement clock with a predetermined frequency and supplies the test result to the spindle control circuit 8.

The spindle control circuit 8 generates a control signal that controls the number of rotations of the spindle motor 11 corresponding to both the measured value of the maximum code inversion length received from the Tmax detector 6 and the frame synchronous detection signal so that the measured value of the maximum code inversion length and the period of the frame synchronous detection signal become predetermined values. The generated control signal is supplied to the spindle motor 11.

The measured value of the maximum code inversion length received from the Tmax detector 6 is especially useful for controlling the spindle motor 11. This is because when a track that is largely apart from a predetermined reproduced track is reproduced after high speed seek operation is performed, if the data rate of the reproduced data is the same as that at which the data seek operation has not been performed, the number of rotations of the disc should accord with the track. The number of rotations of the disc just after the high speed seek operation has been performed is near that before the seek operation has been performed. Thus, the data rate of the reproduced data before the seek operation has been performed remarkably differs from that after the seek operation has been performed. In this case, the PLL 4 may not be locked. Thus, since the frame synchronous signal detector 7 does not correctly operate, correct synchronous detection signal cannot be obtained. Consequently, the number of rotations of the disc cannot be controlled corresponding to the reproduced track. On the other hand, the maximum code inversion length of the Tmax detector 6 is measured corresponding to the predetermined measurement clock irrespective of whether or not the PLL 4 has been locked.

Next, the reason for detecting the Tmax will be described.

When the data rate is detected corresponding to the reproduced signal, Tmax or Tmin is preferably detected. This is because the maximum code inversion length or the minimum code inversion length of the reproduced signal can be relatively easily detected. When Tmax or Tmin is detected corresponding to the same measurement clock, the measuring accuracy of Tmax is higher than that of Tmin. In addition, the frame synchronous signal of the CD contains Tmax. Thus, Tmax is always obtained every predetermined length.

In recent years, optical discs that have higher density and higher capacity than CDs have been required. As a method for accomplishing optical discs with high density, highly efficient coding technique using RLL (Run Length Limited) code is known. In the highly efficient coding technique using the RLL code, the minimum code inversion length (Tmin) is preferably increased. Thus, 4-9 modulation system that has higher effectiveness than the EFM system has become attractive. In the 4-9 modulation system, the minimum code inversion length (Tmin) is 4T and the maximum code inversion length (Tmax) is 18T.

However, in the 4-9 modulation system, when the frame synchronous signal simply has the maximum code inversion length (Tmax), depending on a signal pattern that follows the maximum code inversion length, the frame synchronous signal cannot be clearly distinguished from patterns of other signals. Thus, the detecting accuracy of the frame synchronous signal may be degraded.

On the other hand, when the maximum code inversion length (Tmax) is long, out-of-synchronism tends to take place in the PLL 4. The out-of-synchronism especially takes place in an unstable state just after the seek operation is performed.

In addition, when address information such as an AM (Address Mark) and a sector number has been recorded after the frame synchronous signal, if out-of-synchronism takes place in the PLL 4, the address information, which is used to determine the result of the seek operation, cannot be quickly and properly read, thereby increasing the seek time.

As described above, when the maximum code inversion length (Tmax) is used for the frame synchronous signal of a recording medium such as an optical disc on which signals are recorded corresponding to the 4-9 modulation system, the detecting accuracy of the frame synchronous signal tends to be deteriorated. In addition, when data is reproduced from the disc, out-of-synchronism tends to take place in the PLL. Thus, the address information immediately following the frame synchronous signal cannot be quickly and correctly read. Consequently, the seek time increases.

An object of the present invention is to solve the above-described problems and to provide a recording medium and a method for recording a signal thereon that allow a synchronous pattern in each frame to be accurately and easily detected.

Another object of the present invention is to provide a recording medium and a method for recording a signal thereon that allow acquisition-of-synchronism to be quickly performed corresponding to a second synchronous pattern even if out-of-synchronism takes place upon reading a first synchronous pattern containing the maximum code inversion length.

A first aspect of the present invention is a recording medium having a first frame and a second frame, the first frame including a first synchronous pattern, a second synchronous pattern that follows the first synchronous pattern and first data, the first data being modulated into RLL code, the second frame including the first synchronous pattern and second data, the second data being modulated into the RLL code, one sector of the recording medium being composed of at least one first frame and a plurality of second frames, wherein the first synchronous pattern in each of frames is recorded with a pattern that includes the maximum code inversion length of the RLL code and that does not correspond to a modulation rule of the RLL code.

A second aspect of the present invention is a recording medium having a first frame and a second frame, the first frame including a first synchronous pattern, a second synchronous pattern that follows the first synchronous pattern and first data, the first data being modulated into RLL code, the second frame including the first synchronous pattern and second data, the second data being modulated into the RLL code, one sector of the recording medium being composed of at least one first frame and a plurality of second frames, wherein the second synchronous pattern in the first frame is recorded with a first pattern that includes a plurality of successive sequences of the minimum code inversion length of the RLL code and that does not correspond to a modulation rule of the RLL code.

A third aspect of the present invention is a recording medium having a first frame and a second frame, the first frame including a first synchronous pattern, a second synchronous pattern that follows the first synchronous pattern and first data, the first data being modulated into RLL code, the second frame including the first synchronous pattern and second data, the second data being modulated into the RLL code, one sector of the recording medium being composed of at least one first frame and a plurality of second frames, wherein the first synchronous pattern in each of frames is recorded with a pattern that includes the maximum code inversion length of RLL code and that does not correspond to a modulation rule of the RLL code, and wherein the second synchronous pattern in the first frame is recorded with a first pattern that includes a plurality of successive sequences of the minimum code inversion length of the RLL code and that does not correspond to a modulation rule of the RLL code.

A fourth aspect of the present invention is the recording medium according to the third aspect thereof, wherein the second synchronous pattern is further recorded with a second pattern that follows the first pattern and that is longer than the minimum code inversion length and shorter than the maximum code inversion length.

A fifth aspect of the present invention is a method for recording a signal on a recording medium having a first frame and a second frame, the first frame including a first synchronous pattern, a second synchronous pattern that follows the first synchronous pattern and first data, the first data being modulated into RLL code, the second frame including the first synchronous pattern and second data, the second data being modulated into the RLL code, one sector of the recording medium being composed of at least one first frame and a plurality of second frames, wherein a pattern that includes the maximum code inversion length of the RLL code and that does not correspond to a modulation rule of the RLL code is recorded as at least part of the first synchronous pattern.

A sixth aspect of the present invention is a method for recording a signal on a recording medium having a first frame and a second frame, the first frame including a first synchronous pattern, a second synchronous pattern that follows the first synchronous pattern and first data, the first data being modulated into RLL code, the second frame including the first synchronous pattern and second data, the second data being modulated into the RLL code, one sector of the recording medium being composed of at least one first frame and a plurality of second frames, wherein a pattern that includes a plurality of successive sequences of the minimum code inversion length of the RLL code and that does not correspond to a modulation rule of the RLL code is recorded as at least part of the second synchronous pattern.

A seventh aspect of the present invention is a method for recording a signal on a recording medium having a first frame and a second frame, the first frame including a first synchronous pattern, a second synchronous pattern that follows the first synchronous pattern and first data, the first data being modulated into RLL code, the second frame including the first synchronous pattern and second data, the second data being modulated into the RLL code, one sector of the recording medium being composed of at least one first frame and a plurality of second frames, wherein a pattern that includes the maximum code inversion length of the RLL code and that does not correspond to a modulation rule of the RLL code is recorded as at least part of the first synchronous pattern, and wherein a first pattern that includes a plurality of successive sequences of the minimum code inversion length of the RLL code and that does not correspond to a modulation rule of the RLL code is recorded as at least part of the second synchronous pattern.

An eighth aspect of the present invention is the recording method according to the seventh aspect thereof, wherein the second synchronous pattern is further recorded with a second pattern that follows the first pattern and that is longer than the minimum code inversion length and shorter than the maximum code inversion length.

As described above, since the first synchronous pattern is recorded with a pattern that includes the maximum length code inversion length of the RLL code and that does not correspond to the RLL code modulation rule, when data is reproduced, the first synchronous pattern can be uniquely distinguished from other signal patterns. Thus, the first synchronous pattern can be easily and accurately detected.

In addition, since the second synchronous pattern is recorded with a pattern that includes a plurality of successive sequences of the minimum code inversion length of the RLL code and that does not correspond to the RLL code modulation rule, when data is reproduced, the second synchronous pattern can be uniquely distinguished from other signal patterns. Thus, the second synchronous pattern can be easily and accurately detected. Moreover, even if out-of-synchronization takes place in the PLL due to the reading of the first synchronous pattern that contains the maximum code inversion length, the acquisition of synchronism can be quickly performed by the second synchronous pattern. Thus, the address information following the second synchronous pattern can be quickly and accurately read.

Furthermore, since the second synchronous pattern is recorded with both a first pattern that does not correspond to the RLL code modulation rule and a second pattern that is longer than the minimum code inversion length and shorter than the maximum code inversion length, even if all the first pattern of the second synchronous pattern cannot be correctly detected, when the second pattern is detected, the probability of failing to detect the second synchronous pattern can be further lowered.

These and other objects, features and advantages of the present invention will become more apparent in light of the following detailed description of a best mode embodiment thereof, as illustrated in the accompanying drawings.
Fig. 1 is a schematic diagram showing the data construction of frames formed on a medium such as optical disc according to an embodiment of the present invention;
Fig. 2 is a schematic diagram showing the construction of a code conversion table corresponding to 4-9 modulation technique;
Fig. 3 is a schematic diagram showing binary data of a frame synchronous signal and a signal pattern in which the binary pattern has been converted corresponding to NRZI technique;
Fig. 4 is a schematic diagram showing AM binary data and a signal pattern in which the AM binary pattern has been converted corresponding to the NRZI technique;
Fig. 5 is a schematic diagram showing data construction of frames of a CD; and
Fig. 6 is a block diagram showing the construction of a CD reproducing apparatus.

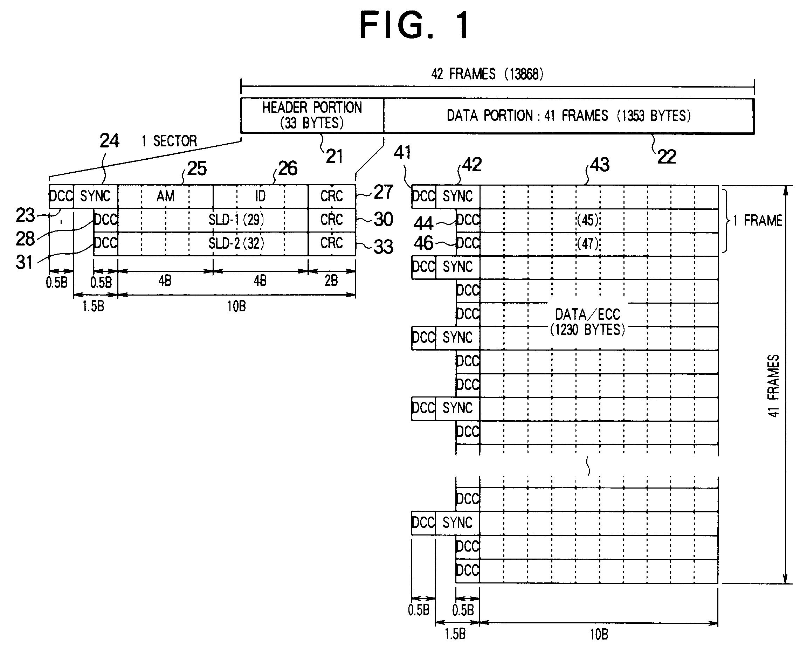

Next, an embodiment of the present invention will be described with reference to the accompanying drawings. For the optical disc according to the embodiment, data is encoded corresponding to the 4-9 modulation technique, which is the RLL (Run Length Limited) modulation technique. The 4-9 modulation technique is used to convert 4-bit data into a 9-bit signal pattern. The details of the 4-9 modulation technique are described in for example Japanese Patent Application No. 5-76692. As shown in Fig. 1, one sector is composed of 42 frames. One optical disc has a plurality of successive sectors. Each sector has the same code length (33 bytes). One byte is composed of 18 bits. A first frame of the sectors is referred to as a header portion 21. The other 41 frames are referred to as a data portion 22.

The first frame (header portion 21) of the sectors is composed of a 2-byte frame synchronous signal (DCC (23) + SYNC (24)), a 4-byte AM (Address Mark) (25), a 4-byte ID (26), a 2-byte first CRC (27), a 0.5-byte DCC (28), an 8-byte SLD (center link data)-1 (29), a 2-byte second CRC (30), a 0.5-byte DCC (31), an 8-byte SLD-2 (32), and a 2-byte third CRC (33). The 2-byte frame synchronous signal is a first synchronous pattern. The 4-byte AM (25) is a second synchronous pattern.

The DCCs (23, 28, 31) are cancel codes that are added so as to suppress DC components of signals that have been converted corresponding to the NRZI technique. The SYNC (24) is a synchronous code that generates a timing at which data is extracted byte by byte in the 4-9 modulation.

The frame synchronous signal, which is composed of the DCC (23) and the SYNC (24), does not correspond to the 4-9 modulation technique. In other words, the frame synchronous signal contains a signal pattern that is not present in the 4-9 modulation code.

The AM (Address Mark) (25), which is the second synchronous pattern, is data that represents the position of the ID (26) and the delimitation of a sector.

The AM (25) is also composed of a signal pattern that is not present in the 4-9 modulation code.

The ID (26) is data that represents a sector number, which is address data.

The first CRC (27) is an error check code for the ID (26).

The SLD-1 (29) and SLD-2 (32) are data that represents data type (for example, image signal, character data, and so forth) of the sectors, subordinate relation of sectors, and so forth.

The second CRC (30) is an error check code for the SLD-1 (29). The third CRC (33) is an error check code for the SLD-2 (32).

Each of the second to 42nd frames of the sector is composed of a 2-byte frame synchronous signal (DCC (41) + SYNC (42)), 10-byte main data (43), a 0.5-byte DCC (44), 10-byte main data (45), a 0.5-byte DCC (46), and 10-byte main data (47). As with the frame synchronous signal of the first frame (header portion 21), the frame synchronous signal (DCC (41) + SYNC (42)) is composed of a signal pattern that is not present in the 4-9 modulation code.

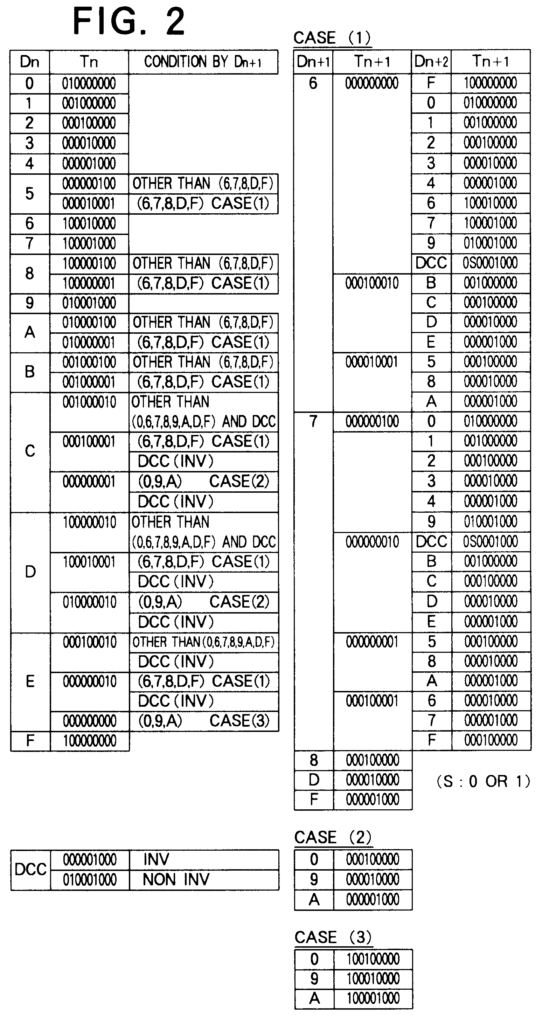

Fig. 2 is a schematic diagram showing the construction of a code conversion table for the 4-9 modulation system. In Fig. 2, Dn is a value of which an input binary data sequence is divided by every four bits and represented in hexadecimal (HEX) notation. Tₙ is a binary bit pattern in which the input Dₙ is converted into 9 bits and at least three "0s" are present between two bit "1s". Due to the relation between Dₙ and Dₙ₊₁, two or three Tₙ patterns are provided. Depending on the value of Dₙ₊₁, the pattern of Tₙ is determined. When Dₙ = 5, Tₙ is either "000000100" or "000010001". When Dₙ₊₁ is 6, 7, 8, D, or F, Tₙ is "000010001". Otherwise, Tₙ is "000000100". When Tₙ is "000010001", depending on Dₙ₊₁, Dₙ₊₂ also corresponds to the table of case (1). As a practical example, when D is 5, 6, or 7, "000010001", "000000000", or "100001000" can be obtained, respectively.

The minimum code inversion length (Tmin) and the maximum code inversion length (Tmax) in the 4-9 modulation code are 4T and 18T, respectively.

Next, the signal pattern of the frame synchronous signal (DCC + SYNC) in each frame and the signal pattern of the AM (25) in the first frame will be described.

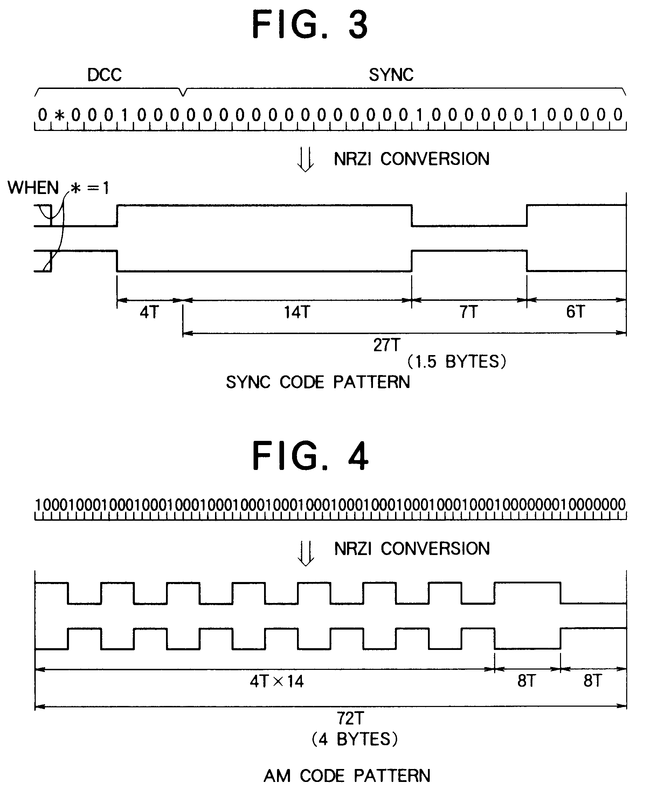

Fig. 3 is a schematic diagram showing binary data of the frame synchronous signal (DCC + SYNC) and a signal pattern in which the binary data has been converted corresponding to the NRZI technique.

As shown in Fig. 3, the signal pattern of which the frame synchronous signal (DCC + SYNC) has not been converted corresponding to the NRZI technique is "0*000100000000000000001000000100000" where "*" is "1" or "0". The DCC depends on the value of "*". In other words, the 4-9 modulation code of the DCC is "000001000" or "010001000" whichever the value of DSV (Digital Sum Value) is smaller.

When the frame synchronous signal is converted corresponding to the NRZI technique, a signal pattern in which a sequence of the maximum code inversion length (Tmax) for 18T of the 4-9 modulation code is followed by a sequence of a code inversion length for 7T is obtained. The signal pattern in which the maximum code inversion length for 18T is followed by the code inversion length for 7T is not present in the 4-9 modulation code.

Thus, the frame synchronous signal is uniquely distinguished from other signal patterns. Consequently, the frame synchronous signal can be easily and accurately detected.

Fig. 4 is a schematic diagram showing binary data of the AM (25) and a signal pattern in which the binary data has been converted corresponding to the NRZI technique.

As shown in Fig. 4, the signal pattern in which the AM (25) has not been converted corresponding to the NRZI technique is "100010001000100010001000100010001000100010001 000100010001000000010000000". When the AM (25) is converted corresponding to the NRZI technique, as shown in Fig. 4, 14 sequences of a code inversion length for 4T are followed by a sequence of a code inversion length for 8T, followed by a code inversion length for 8T or more in which 4T is the minimum code inversion length (Tmin) of the 4-9 modulation code. The signal pattern in which 14 sequences of a code inversion length for 4T is not present in the 4-9 modulation code.

Since the 4-9 modulation code is not present in the signal pattern that represents the AM (25) and the signal pattern contains 14 sequences of a code inversion length for 4T, the AM (25) can be uniquely distinguished from other signal patterns and thereby easily and accurately detected.

Even if out-of-synchronism takes place in the PLL due to the frame synchronous signal in an unstable state just after the seek operation has been performed, the acquisition of synchronism can be easily obtained in the period of the AM (25). Thus, the ID (26) following the AM (25) can be quickly and accurately read, thereby shortening the seek time.

In addition, with 14 sequences of a code inversion length for 4T that are followed by a code inversion length for 8T, the end portion of the AM can be detected. Thus, even if a frame synchronous signal has not been correctly detected or all 14 sequences of a code inversion length for 4T of the AM (25) have not been correctly detected, when a code inversion length for 8T is detected, the probability for correctly reading the ID (26) following the AM (25) increases, thereby reducing the seek time.

As described above, according to the recording medium and the method for recording a signal thereon of the present invention, since the first synchronous pattern is recorded with a pattern that includes the maximum length code inversion length of the RLL code and that does not correspond to the RLL code modulation rule, when data is reproduced, the first synchronous pattern can be uniquely distinguished from other signal patterns. Thus, the first synchronous pattern can be easily and accurately detected.

In addition, since the second synchronous pattern is recorded with a pattern that includes a plurality of successive sequences of the minimum code inversion length of the RLL code and that does not correspond to the RLL code modulation rule, when data is reproduced, the second synchronous pattern can be uniquely distinguished from other signal patterns. Thus, the second synchronous pattern can be easily and accurately detected. Moreover, even if out-of-synchronization takes place in the PLL due to the reading of the first synchronous pattern that contains the maximum code inversion length, the acquisition of synchronism can be quickly performed by the second synchronous pattern. Thus, the address information following the second synchronous pattern can be quickly and accurately read. As a result, the seek time can be shortened.

Furthermore, since the second synchronous pattern is recorded with both a first pattern that contains a plurality of successive sequences of the minimum code inversion length of the RLL code and that does not correspond to the RLL code modulation rule and a second pattern that is longer than the minimum code inversion length and shorter than the maximum code inversion length, even if all the first pattern of the second synchronous pattern cannot be correctly detected, when the second pattern is detected, the probability of failing to detect the second synchronous pattern can be further lowered.

Although the present invention has been shown and described with respect to a best mode embodiment thereof, it should be understood by those skilled in the art that the foregoing and various other changes, omissions, and additions in the form and detail thereof may be made therein without departing from the spirit and scope of the present invention.

## Claims

1. A recording medium having a first frame and a second frame, the first frame including a first synchronous pattern, a second synchronous pattern that follows the first synchronous pattern and first data, the first data being modulated into RLL code, the second frame including the first synchronous pattern and second data, the second data being modulated into the RLL code, one sector of said recording medium being composed of at least one first frame and a plurality of second frames,
wherein the first synchronous pattern in each of frames is recorded with a pattern that includes the maximum code inversion length of the RLL code and that does not correspond to a modulation rule of the RLL code.

2. A recording medium having a first frame and a second frame, the first frame including a first synchronous pattern, a second synchronous pattern that follows the first synchronous pattern and first data, the first data being modulated into RLL code, the second frame including the first synchronous pattern and second data, the second data being modulated into the RLL code, one sector of said recording medium being composed of at least one first frame and a plurality of second frames,
wherein the second synchronous pattern in the first frame is recorded with a first pattern that includes a plurality of successive sequences of the minimum code inversion length of the RLL code and that does not correspond to a modulation rule of the RLL code.

3. The recording medium as set forth in claim 1,
wherein the second synchronous pattern is recorded with a first pattern that includes a plurality of successive sequences of the minimum code inversion length of the RLL code and that does not correspond to a modulation rule of the RLL code.

4. The recording medium as set forth in claim 2,
wherein the second synchronous pattern is recorded with a second pattern that follows the first pattern and that is longer than the minimum code inversion length and shorter than the maximum code inversion length.

5. The recording medium as set forth in claim 3, wherein the second synchronous pattern is recorded with a second pattern that follows the first pattern and that is longer than the minimum code inversion length and shorter than the maximum code inversion length.

6. The recording medium as set forth in claim 1,
wherein the first synchronous pattern includes a cancel code at the beginning, the cancel code being adapted for suppressing a DC component of a signal of a frame that includes the first synchronous pattern, the signal having been converted corresponding to NRZI technique.

7. The recording medium as set forth in claim 2,
wherein the first synchronous pattern includes a cancel code at the beginning, the cancel code being adapted for suppressing a DC component of a signal of a frame that includes the first synchronous pattern, the signal having been converted corresponding to NRZI technique.

8. The recording medium as set forth in claim 1,
wherein data for identifying a sector is recorded after the second synchronous pattern.

9. The recording medium as set forth in claim 2,
wherein data for identifying a sector is recorded after the second synchronous pattern.

10. The recording medium as set forth in claim 1,
wherein the RLL code is 4-9 modulation code in which 4-bit data is converted into 9-bit data and in which the minimum code inversion length is 4T and the maximum code inversion length is 18T.

11. The recording medium as set forth in claim 2,
wherein the RLL code is 4-9 modulation code in which 4-bit data is converted into 9-bit data and in which the minimum code inversion length is 4T and the maximum code inversion length is 18T.

12. A method for recording a signal on a recording medium having a first frame and a second frame, the first frame including a first synchronous pattern, a second synchronous pattern that follows the first synchronous pattern and first data, the first data being modulated into RLL code, the second frame including the first synchronous pattern and second data, the second data being modulated into the RLL code, one sector of said recording medium being composed of at least one first frame and a plurality of second frames,
wherein a pattern that includes the maximum code inversion length of the RLL code and that does not correspond to a modulation rule of the RLL code is recorded as at least part of the first synchronous pattern.

13. A method for recording a signal on a recording medium having a first frame and a second frame, the first frame including a first synchronous pattern, a second synchronous pattern that follows the first synchronous pattern and first data, the first data being modulated into RLL code, the second frame including the first synchronous pattern and second data, the second data being modulated into the RLL code, one sector of said recording medium being composed of at least one first frame and a plurality of second frames,
wherein a first pattern that includes a plurality of successive sequences of the minimum code inversion length of the RLL code and that does not correspond to a modulation rule of the RLL code is recorded as at least part of the second synchronous pattern.

14. A method for recording a signal on a recording medium having a first frame and a second frame, the first frame including a first synchronous pattern, a second synchronous pattern that follows the first synchronous pattern and first data, the first data being modulated into RLL code, the second frame including the first synchronous pattern and second data, the second data being modulated into the RLL code, one sector of said recording medium being composed of at least one first frame and a plurality of second frames,
wherein a pattern that includes the maximum code inversion length of the RLL code and that does not correspond to a modulation rule of the RLL code is recorded as at least part of the first synchronous pattern, and
wherein a first pattern that includes a plurality of successive sequences of the minimum code inversion length of the RLL code and that does not correspond to a modulation rule of the RLL code is recorded as at least part of the second synchronous pattern.

15. The recording method as set forth in claim 12,
wherein a pattern that includes the maximum code inversion length of the RLL code and that does not correspond to a modulation rule of the RLL code is recorded as at least part of the first synchronous pattern,
wherein a first pattern that includes a plurality of successive sequences of the minimum code inversion length of the RLL code and that does not correspond to a modulation rule of the RLL code is recorded as at least part of the second synchronous pattern, and
wherein the second synchronous pattern is recorded with a second pattern that follows the first pattern and that is longer than the minimum code inversion length and shorter than the maximum code inversion length.

16. The signal recording method as set forth in claim 13,
wherein a second pattern that follows the first pattern and that is longer than the minimum code inversion length and shorter than the maximum code inversion length is recorded as at least part of the second synchronous pattern.
